(19) Europäisches Patentamt / European Patent Office / Office européen des brevets

(11) **EP 4 154 034 B1**

(12) **EUROPÄISCHE PATENTSCHRIFT**

(45) Veröffentlichungstag und Bekanntmachung des Hinweises auf die Patenterteilung:
**28.01.2026 Patentblatt 2026/05**

(21) Anmeldenummer: **21734050.4**

(22) Anmeldetag: **11.05.2021**

(51) Internationale Patentklassifikation (IPC):
*G01S 17/10* (2020.01)     *G01S 17/931* (2020.01)
*G05D 1/00* (2024.01)     *G01S 7/48* (2006.01)
*G01S 17/48* (2006.01)     *G01S 17/89* (2020.01)

(52) Gemeinsame Patentklassifikation (CPC):
**G05D 1/0257; G01S 7/4808; G01S 17/10;
G01S 17/48; G01S 17/89; G01S 17/931;
G05D 1/024; G05D 1/0255; G05D 1/0274**

(86) Internationale Anmeldenummer:
**PCT/EP2021/062497**

(87) Internationale Veröffentlichungsnummer:
**WO 2021/233738 (25.11.2021 Gazette 2021/47)**

(54) **ERSTELLEN EINER UMGEBUNGSKARTE**

CREATION OF A MAP OF THE SURROUNDINGS

CRÉATION D'UNE CARTE DE L'ENVIRONNEMENT

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorität: **20.05.2020 DE 102020206355**

(43) Veröffentlichungstag der Anmeldung:
**29.03.2023 Patentblatt 2023/13**

(73) Patentinhaber: **BSH Hausgeräte GmbH
81739 München (DE)**

(72) Erfinder:
• **HAUG, Sebastian
  70771 Leinfelden-Echterdignen (DE)**
• **FREMEREY, Maximilian
  97616 Bad Neustadt / Saale (DE)**
• **LAMPACRESCIA, Marco
  70192 Stuttgart (DE)**

(56) Entgegenhaltungen:
EP-A1- 3 514 493     DE-A1- 102018 217 000
US-A1- 2018 253 107

• **BELTER DOMINIK ET AL: "Keyframe-based Local Normal Distribution Transform Occupancy Maps for Environment Mapping", 2018 IEEE 23RD INTERNATIONAL CONFERENCE ON EMERGING TECHNOLOGIES AND FACTORY AUTOMATION (ETFA), IEEE, vol. 1, 4 September 2018 (2018-09-04), pages 706 - 712, XP033426003, DOI: 10.1109/ETFA.2018.8502517**

**Beschreibung**

Die Erfindung betrifft die Erstellung einer Umgebungskarte für ein fahrbares Hausgerät. Insbesondere betrifft die Erfindung das Entfernen von falschen Messungen.

Ein Bodenreinigungsroboter ist dazu eingerichtet, in einem Haushalt eingesetzt zu werden, beispielsweise in einem Haus oder in einer Wohnung. Der Roboter kann sich selbst fortbewegen und verfügt über Sensoren, um seine Umgebung abzutasten. Ein Sensor kann eine Kollision mit einem Hindernis erfassen, ein anderer Sensor kann eine berührungslose Abtastung der Umgebung ermöglichen.

Um ein planvolles Vorgehen bei der Reinigung des Bodens zu ermöglichen, benötigt der Roboter eine Umgebungskarte, die angibt, welche Bereiche des Bodens für ihn erreichbar sind und welche nicht. Die Umgebungskarte kann erstellt werden, indem der Roboter durch die Wohnung oder das Haus fährt und dabei die Umgebung berührungslos abtastet. Mittels eines SLAM-Verfahrens (Simultaneous Localization And Mapping) können gleichzeitig die Position des Roboters bestimmt und vom Roboter aus erfasste Hindernisse kartographiert werden.

Insbesondere berührungslos arbeitende Sensoren wie Radar- oder LiDAR-Sensoren können sogenannte Phantompunkte in der Umgebung des Roboters begünstigen, an denen sich ein Hindernis zu befinden scheint, an denen aber tatsächlich eine freie Fläche vorliegt. Ein solches Messrauschen kann insbesondere durch helles Licht oder im Bereich eines Hindernisses aus einem transparenten oder schlecht reflektierenden Material hervorgerufen sein. Häufig finden sich Fehlmessungen nahe an einer Begrenzung eines tatsächlichen Hindernisses. Dieser Effekt wird auch "mixed pixel effect" genannt.

Die Druckschriften DE 10 2018 217000 A1, US 2018/253107 A, EP 3 514 493 A1, US2019/0035090 A1 und BELTER DOMINIK ET AL: "Keyframe-based Local Normal Distribution Transform Occupancy Maps for Environment Mapping", 2018 IEEE 23FiD INTERNATIONAL CONFERENCE ON EMERGING TECHNOLOGIES AND FACTORY AUTOMATION (ETFA), IEEE, Bd. 1, 4. September 2018 (2018-09-04), Seiten 706-712, XP033426003, DOI: 10.1109/ETFA.2018.8502517, beschreiben Verfahren zum Erstellen einer Umgebungskarte, bei dem bestimmte Messdaten unter Berücksichtigung vordefinierter Voraussetzungen verworfen werden.

Eine der vorliegenden Erfindung zu Grunde liegende Aufgabe besteht in der Angabe einer verbesserten Technik zur Entfernung von Phantompunkten aus Messdaten eines berührungslosen Sensors, um eine verbesserte Kartographierung und/oder Positionsbestimmung eines Hausgeräts zu erlauben. Die Erfindung löst diese Aufgabe mittels der Gegenstände der unabhängigen Ansprüche. Unteransprüche geben bevorzugte Ausführungsformen wieder.

Nach einem ersten Aspekt der vorliegenden Erfindung umfasst ein Verfahren zum Erstellen einer Umgebungskarte für ein fahrbares Hausgerät Schritte des Aussendens eines Messsignals in die Umgebung des Hausgeräts und des Empfangens von Reflexionen des Messsignals; des Bestimmens von Punkten in der Umgebung, denen eine Reflexion des Messsignals zugeordnet ist; des Bestimmens einer örtlichen Verteilung der Punkte in der Umgebung; des Verwerfens der Punkte, falls die Verteilung weniger als vorbestimmt einer geraden Linie entspricht; und des Erstellens der Umgebungskarte auf der Basis von verbleibenden Punkten, wobei die Umgebung in Kacheln vorbestimmter Größe unterteilt wird; und wobei die Punkte einer Kachel verworfen werden, falls die örtliche Verteilung der Punkte der Kachel weniger als vorbestimmt einer geraden Linie entspricht.

Es wurde erkannt, dass für das Hausgerät vor allem Punkte interessant sind, die eine gerade Linie bilden. Die gerade Linie kann eine Begrenzung eines Hindernisses umfassen, beispielsweise einer Wand oder eines Möbelstücks. Durch das Verwerfen von Punkten, die weniger als vorbestimmt einer geraden Linie entsprechen, können Phantommessungen effizient aus den Messdaten entfernt werden. Eine Positionierung des Hausgeräts und/oder eine Kartographierung einer Umgebung kann verbessert nur auf korrekten Messungen beruhen, sodass eine Bestimmungsqualität oder Bestimmungssicherheit verbessert sein können.

Die Umgebung wird in Kacheln vorbestimmter Größe unterteilt, wobei die Punkte einer Kachel verworfen werden, falls die örtliche Verteilung der Punkte der Kachel weniger als vorbestimmt einer geraden Linie entspricht. Eine Kachel kann beispielsweise eine Größe von ca. 100 x 100 cm aufweisen; andere Größen sind jedoch auch möglich. Die Kacheln können allseitig aneinander angrenzen, sodass die Umgebung lückenlos von Kacheln abgedeckt sein kann. Ebenfalls können nebeneinanderliegende Kacheln einander überlappen, zum Beispiel um jeweils 50 %. In einer Ausführungsform umfasst das Verfahren den Schritt Verwerfens von Punkten, deren Abstand zu einem durchschnittlichen Ort der Punkte einen vorbestimmten Wert übersteigt.

Dadurch können insbesondere Punkte behalten werden, die eine dichte Struktur bilden. Einzelne Punkte hingegen, die von den meisten anderen Punkten entfernt liegen, können verworfen werden. Durch passende Wahl des vorbestimmten Werts können insbesondere Phantompunkte, die sich nahe einem tatsächlichen Hindernis befinden, aber kein Teil des Hindernisses sind, effektiv entfernt werden.

Bei dem Verfahren wird zuerst geprüft, ob Punkte ganzer Kacheln verworfen werden sollen, und erst danach, ob einzelne Punkte verworfen werden sollen. In einer Variante können die Testkriterien in umgekehrter Reihenfolge angewandt werden.

Die Umgebung wird in Kacheln vorbestimmter Größe unterteilt, wie oben beschrieben ist. Ein Punkt, der einer Kachel zugeordnet ist, kann verworfen werden, falls sein Abstand zu einem durchschnittlichen Ort der Punkte der Kachel den vorbestimmten Wert übersteigt. Der durchschnittliche Ort liegt stets auf der Kachel und gibt das statistische Mittel der Orte der von der Kachel umfassten Punkte an. In einer besonders bevorzugten Ausführungsform der hierin beschriebenen Erfindung wird eine Normalverteilungstransformation NDT für eine vorbestimmte Anzahl Punkte bestimmt. Die NDT gibt einen durchschnittlichen Ort der Punkte und die Varianz der Punkte an. Der erste Test, der zum Verwerfen aller untersuchten Punkte führen kann, und der zweite Test, der zum Verwerfen einzelner Punkte führen kann, können vorteilhaft leicht bezüglich der NDT angewandt werden. Dabei kann die NDT mit überschaubarem

Aufwand für eine Vielzahl Punkte bestimmt werden. Es ist besonders bevorzugt, NDTs jeweils für Punkte einer Kachel zu bestimmen, wie hierin beschrieben ist.

Die Punkte sind üblicherweise jeweils in zwei Dimensionen bestimmt, wobei die Dimensionen üblicherweise in einer horizontalen Ebene bezüglich des Hausgeräts liegen. Die Varianz einer Anzahl Punkte umfasst dann zwei Eigenvektoren. Allgemein umfasst die Varianz so viele Eigenvektoren wie die umfassten Punkte Dimensionen aufweisen. Zu jedem Eigenvektor der Varianz kann ein Eigenwert bestimmt werden. Die betrachteten Punkte können verworfen werden, falls ein Verhältnis zwischen dem größeren und dem kleineren der Eigenwerte mehr als vorbestimmt von eins abweicht.

Die betrachteten Punkte sind wesentlich stärker nach Art einer geraden Linie organisiert, wenn das Verhältnis signifikant von eins verschieden ist. Typischerweise beträgt das genannte Verhältnis bei einer geraden Linie in der Kachel mehrere 100, mehrere 1000 oder noch mehr. Sind die Eigenwerte sehr ähnlich groß, kann das Verhältnis nahe eins liegen. Befindet sich beispielsweise gar kein Hindernis im betrachteten Bereich, kann das Verhältnis unter 10, unter 2 oder sogar unter 1,1 absinken.

In einer weiteren Ausführungsform können die Punkte einer Kachel verworfen werden, falls einer der Eigenwerte einen vorbestimmten Wert übersteigt oder unterschreitet. Beispielsweise kann bestimmt werden, ob der kleinere der Eigenwerte einen vorbestimmten Minimalwert unterschreitet oder einen vorbestimmten Maximalwert übersteigt. In entsprechender Weise kann auch geprüft werden, ob der größere der Eigenwerte einen vorbestimmten Minimalwert unterschreitet oder einen vorbestimmten Maximalwert übersteigt. Dadurch können weitere Indizien, die auf eine stark verrauschte Messung hinweisen, vorteilhaft ausgewertet werden. Dieser Test kann insbesondere zusätzlich zur oben beschriebenen Betrachtung des Verhältnisses der Eigenwerte erfolgen.

Der Abstand kann auf der Basis des Mahalanobis-Abstands des Punkts zum durchschnittlichen Punkt bestimmt werden. Dieser Abstand ist zwischen Punkten in einem mehrdimensionalen Vektorraum definiert und gibt intuitiv den Abstand der Punkte in Standardabweichungen an. Der Mahalanobis-Abstand kann einfach bestimmt werden und ist aussagekräftig im betrachteten Vektorraum.

Nach einem zweiten Aspekt der Erfindung umfasst eine erste Vorrichtung zur Bestimmung einer Umgebungskarte für ein fahrbares Hausgerät eine Sendeeinrichtung zur Aussendung eines Messsignals in die Umgebung des Hausgeräts; eine Empfangseinrichtung zum Empfangen von Reflexionen des Messsignals; und eine Verarbeitungseinrichtung. Dabei ist die Verarbeitungseinrichtung dazu eingerichtet, Punkte in der Umgebung zu bestimmen, denen eine Reflexion des Messsignals zugeordnet ist; eine örtliche Verteilung der Punkte in der Umgebung zu bestimmen; die Punkte zu verwerfen, falls die Verteilung weniger als vorbestimmt einer geraden Linie entspricht; die Umgebungskarte auf der Basis von verbleibenden Punkten zu bestimmen; die Umgebung in Kacheln vorbestimmter Größe zu unterteilen, wobei die Verarbeitungseinrichtung dazu eingerichtet ist, die Punkte einer Kachel zu verwerfen, falls die örtliche Verteilung der Punkte der Kachel weniger als vorbestimmt einer geraden Linie entspricht.

In einer Ausführungsform umfasst die Vorrichtung die Verarbeitungseinrichtung, die dazu eingerichtet ist, Punkte zu verwerfen, deren Abstände zu einem durchschnittlichen Ort der Punkte einen vorbestimmten Wert übersteigen.

Die beiden Ausführungsformen der Vorrichtung können auch miteinander integriert aufgebaut sein, sodass die Verarbeitungseinrichtung dazu eingerichtet ist, die betrachteten Punkte zu verwerfen, falls die Verteilung weniger als vorbestimmt einer geraden Linie entspricht; und einzelne Punkte zu verwerfen, deren Abstände zu einem durchschnittlichen Ort der Punkte einen vorbestimmten Wert übersteigen.

Die Verarbeitungseinrichtung der Vorrichtung kann dazu eingerichtet sein, eines der hierin beschriebenen Verfahren ganz oder teilweise auszuführen. Dazu kann die Verarbeitungseinrichtung einen programmierbaren Mikrocomputer oder Mikrocontroller umfassen und das Verfahren kann in Form eines Computerprogrammprodukts mit Programmcodemitteln vorliegen. Das Computerprogrammprodukt kann auch auf einem computerlesbaren Datenträger abgespeichert sein. Merkmale oder Vorteile des Verfahrens können auf die Vorrichtung übertragen werden und umgekehrt.

In einer bevorzugten Ausführungsform sind an der Vorrichtung die Sendeeinrichtung und die Empfangseinrichtung von einem LiDAR-Sensor umfasst. Der LiDAR-Sensor kann insbesondere in horizontaler Richtung messen und einen Erfassungswinkel von bis zu 360° aufweisen. In einer ersten Variante arbeitet er nach dem time-of-flight (TOF) Prinzip, indem der Abstand zu einem Punkt an einem Hindernis aufgrund der Zeit zwischen dem Aussenden von Licht und dem Eintreffen des am Hindernis reflektierten Lichts bestimmt und mit der Ausbreitungsgeschwindigkeit von Licht multipliziert wird. Alternativ dazu kann der Sensor eine Korrelation eines modulierten Sendesignals mit einem Empfangssignal verwenden, um den Abstand zu einem Reflexionspunkt zu bestimmen. Dabei können mehrere Modulationsfrequenzen verwendet werden, um den eindeutigen Messbereich zu vergrößern. In einer zweiten Variante arbeitet der Sensor nach dem Triangulationsprinzip, wobei er dazu eingerichtet ist, die Richtung eines Punkts an einem Hindernis bezüglich Richtungswinkel des Punkts von zwei voneinander beabstandeten Orten aus zu bestimmen. Beide Varianten können kostengünstig sein und eine ausreichend genaue Abtastung der Umgebung eines typischen Hausgeräts bereitstellen.

Nach einem weiteren Aspekt der Erfindung umfasst das Hausgerät einen Bodenreinigungsroboter mit der hierin beschriebenen Vorrichtung. Der Bodenreinigungsroboter kann dazu eingerichtet sein, die Bodenfläche eines Haushalts zu reinigen, beispielsweise mittels einer pneumatischen Saugeinrichtung oder einer Einrichtung zur Nassreinigung. In einer weiteren Ausführungsform kann das Hausgerät praktisch jede Art von mobilem bodengestütztem Roboter umfassen, beispielsweise auch einen Rasenmähroboter oder einen Wachroboter.

Die Erfindung wird nun unter Bezug auf die beiliegenden Figuren genauer beschrieben, in denen:

Figur 1 ein fahrbares Hausgerät in einem Haushalt;
Figur 2 ein Ablaufdiagramm eines Verfahrens;
Figur 3 beispielhafte Varianzen; und
Figur 4 beispielhafte Abtastungen eines Haushalts

darstellt.

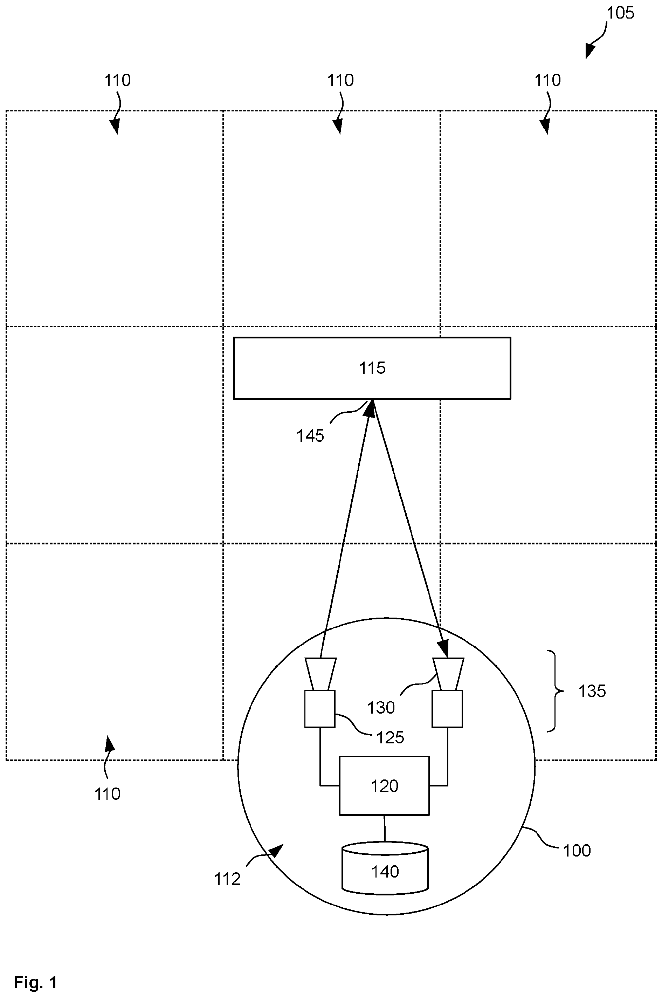

Figur 1 zeigt ein fahrbares Hausgerät 100 in einer Umgebung 105. Das Hausgerät 100 kann insbesondere eine Bodenbearbeitungsmaschine umfassen, beispielsweise einen Staubsaug-Roboter. Das Hausgerät 100 ist dazu eingerichtet, in einem Haushalt eingesetzt zu werden, in dem es selbsttätig auf einer Bodenfläche mobil sein kann. Die Umgebung 105 kann einen Abschnitt des Haushalts oder den gesamten Haushalt umfassen. Die Umgebung 105 kann in einzelne Abschnitte unterteilt werden, die in Figur 1 als aneinander angrenzende, quadratische Kacheln 110 durch unterbrochene Linien angedeutet sind. Die Kacheln 110 sind bevorzugt wie dargestellt schachbrettartig angelegt; eine andere Aufteilung der Bodenfläche ist jedoch auch möglich. Eine gegenseitige Überlappung benachbarter Kacheln 110 ist zum besseren Verständnis nicht dargestellt, kann in der Praxis aber verwendet werden und jeweils ca. 50 % der Fläche einer Kachel 110 betragen.

Das Hausgerät 100 umfasst üblicherweise eine oder mehrere nicht dargestellte Komponenten wie eine Energieversorgung, einen Antriebsmotor, eine drahtlose Kommunikationseinrichtung, eine Einrichtung zur Bearbeitung der Bodenfläche oder einen Kollisionssensor. Außerdem umfasst das Hausgerät 100 eine Vorrichtung 112, die eine Verarbeitungseinrichtung 120 umfasst, die mit einer Sendeeinrichtung 125 und einer Empfangseinrichtung 130 verbunden ist. Die Sendeeinrichtung 125 und die Empfangseinrichtung 130 können von einem gemeinsamen Sensor 135 umfasst sein, der insbesondere als LiDAR-Sensor ausgebildet sein kann. Die Sendeeinrichtung 125 ist dazu eingerichtet, ein Messsignal, insbesondere Licht, in die Umgebung 105 auszusenden und die Empfangseinrichtung 130 ist dazu eingerichtet, das an dem Hindernis 115 reflektierte Signal zu empfangen. Optional umfasst die Vorrichtung 112 ferner einen Speicher 140 zur Ablage einer Umgebungskarte der Umgebung 105. Das Hausgerät 100 kann auf der Basis der Umgebungskarte in seiner Umgebung 105 navigieren und sich gegebenenfalls autonom bewegen.

Die Verarbeitungseinrichtung 120 ist dazu eingerichtet, die Umgebungskarte auf der Basis von Punkten 145 zu bestimmen, die mittels des Sensors 135 in der Umgebung 105 erfasst wurden. Ein Punkt 145 befindet sich an einem Ort in der Umgebung 105 üblicherweise an einer Begrenzung eines Hindernisses 115. Am Punkt 145 wird das Messsignal der Sendeeinrichtung 125 derart reflektiert, dass es in die Empfangseinrichtung 130 fällt. Eine Distanz und eine Richtung des Punkts 145 bezüglich dem Hausgerät 100 können auf der Basis des ausgesandten und des empfangenen Signals bestimmt werden, beispielsweise mittels Triangulation oder auf der Basis einer Senderichtung und der Zeit zwischen dem Aussenden und dem Empfangen des Messsignals. So kann der Ort des Punkts 145 bezüglich des Hausgeräts 100 bestimmt werden. Ist eine Position des Hausgeräts 100 in der Umgebung 105 bekannt, so kann der Ort des Punkts 145 in der Umgebung 105 bestimmt werden.

Messrauschen oder Störungen können bewirken, dass mittels des Sensors 135 ein Punkt 145 bestimmt wird, der tatsächlich nicht an einem Hindernis 115 liegt. Beispielsweise kann eine Reflexion an einem Objekt erfolgen, das nicht im Bewegungsbereich des Hausgeräts 100 liegt, oder das von der Empfangseinrichtung 130 erfasste Signal beruht nicht auf einer einfachen Reflexion des von der Sendeeinrichtung 125 ausgesandten Messsignals, sondern beispielsweise auf Sonnenlicht oder einer mehrfachen Reflexion des Messsignals. Ein solcher bestimmter Punkt 145 wird auch Phantompunkt genannt.

Die Verarbeitungseinrichtung 120 ist bevorzugt dazu eingerichtet, ein SLAM-Verfahren durchzuführen, um einerseits die Position des Hausgeräts in der Umgebung 105 und andererseits die Umgebungskarte zu bestimmen. Es wird vorgeschlagen, bestimmte Punkte 145 daraufhin zu untersuchen, ob es sich um Phantompunkte handelt. Phantompunkte können verworfen werden und die Bestimmung der Umgebungskarte und/oder der Position kann verbessert auf Punkten 145 basieren, die keine Phantompunkte sind.

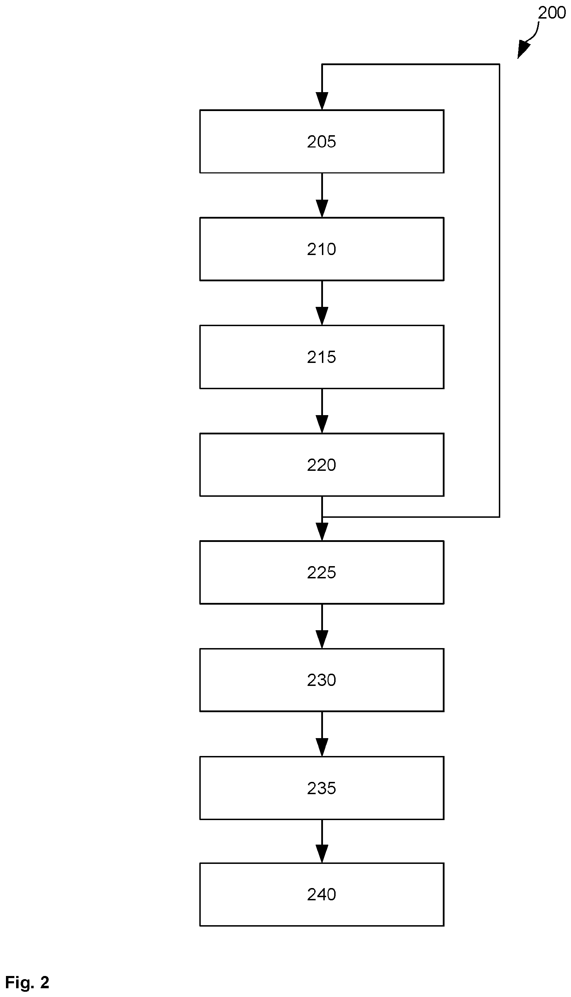

Figur 2 zeigt ein Ablaufdiagramm eines Verfahrens 200 zur Überprüfung von bestimmten Punkten 145. Das Verfahren 200 kann insbesondere an Bord eines Hausgeräts 100, vorzugsweise mittels einer Verarbeitungseinrichtung 120 ausgeführt werden. Eine Reihenfolge, in der die gezeigten Schritte ausgeführt werden, kann variiert werden. Durch Weglassen von Schritten, insbesondere des Schrittes 235, können unterschiedliche Verfahren 200 gebildet werden.

In einem Schritt 205 kann mittels der Sendeeinrichtung 125 ein Messsignal ausgesandt werden. Handelt es sich beim Sensor 135 beispielsweise um einen LiDAR-Sensor, so kann das Messsignal Licht umfassen; im Fall eines Radar-Sensors 135 Radarwellen und im Fall eines Ultraschallsensors Schallwellen. Andere Arten von Sensoren 135 können andere Messsignale verwenden. In einem Schritt 210 kann mittels der Empfangseinrichtung ein Signal empfangen werden, das insbesondere eine Reflexion des zuvor ausgesandten Messsignals umfassen kann.

In einem Schritt 215 kann ein Ort in der Umgebung 105 des Hausgeräts 100 bestimmt werden, an dem die vermeintliche Reflexion des empfangenen Signals stattgefunden hat. Am bestimmten Ort kann ein Punkt 145 bestimmt werden. Zunächst ist aber nicht klar, ob der Punkt 145 tatsächlich Teil eines Hindernisses 115 oder ein Phantompunkt ist, dem kein Hindernis 115 zugeordnet ist. In einem Schritt 220 kann der Punkt 145 aufgrund seines Orts einer Kachel 110 zugeordnet werden. Die Zuordnung von Punkten 145 zu Kacheln 110 hat den Vorteil, dass nicht immer alle von einer Position des Hausgeräts 100 erfassbaren Punkte 145 verarbeitet werden müssen, sondern jeweils nur solche, die in einem vorbestimmten räumlichen Zusammenhang stehen.

Die Schritte 205 bis 220 können mehrfach durchlaufen werden, um eine Vielzahl Abtastungen der Umgebung 105 durchzuführen, die zu einer Vielzahl Punkte 145 führen kann, die in unterschiedlichen Kacheln 110 liegen können. Das Hausgerät 100 kann während des Abtastens stillstehen oder sich auf der Bodenfläche der Umgebung 105 bewegen.

In einem Schritt 225 kann für die Punkte einer Kachel 110 eine Normalverteilungstransformation NDT (Normal Distribution Transform) bestimmt werden. Die NDT wurde von Peter Biber und Wolfgang Straßer, University of Tübingen, in "The Normal Distributions Transform: A New Approach to Laser Scan Matching" vorgeschlagen und umfasst eine Normalverteilung von Punkten 145, die eine lokale Wahrscheinlichkeit der Bestimmung eines Punkts 145 reflektiert.

Die NDT kann wie folgt für Kacheln 110 bestimmt werden, die wenigstens drei Punkte 145 enthält:

   1.) Sammeln aller Punkte $x_{i=1..n}$ in der Kachel 110;
   2.) Bestimmen eines durchschnittlichen Orts

$$q = \frac{1}{n}\sum_i x_i$$

   3.) Bestimmen der Kovarianzmatrix

$$\Sigma = \frac{1}{n}\sum_i x_i\,(x_i - q)(x_i - q)^\tau.$$

Die Wahrscheinlichkeit, einen Punkt 145 am zweidimensionalen Punkt x der betrachteten Kachel 110 zu bestimmen, kann dann durch die Normalverteilung N(q, Σ) modelliert werden:

$$p(x) \sim \exp\left(-\frac{(x-q)^t \Sigma^{-1}(x-q)}{2}\right).$$

Dadurch kann eine abschnittweise kontinuierliche und differenzierbare Beschreibung der zweidimensionalen (horizontalen) Ebene in Form einer Wahrscheinlichkeitsdichte angegeben werden. Weitere Details zur Bestimmung finden sich in der genannten Veröffentlichung.

In einem Schritt 230 kann bestimmt werden, ob die Kachel 110 hauptsächlich verrauschte Punkte 145 enthält. Dies ist insbesondere der Fall, wenn die Punkte 145 keine gerade Linie in der Kachel 110 bilden. Die bestimmte NDT enthält den durchschnittlichen Ort q und eine Varianz der von der Kachel 110 umfassten Punkte 145. Im Zweidimensionalen umfasst die Varianz zwei Eigenvektoren, für die jeweils ein Eigenwert bestimmt werden kann. Ein Eigenwert beschreibt hierbei, wieviel Varianz in diesem Eigenvektor enthalten ist. Ein Quotient aus dem größeren Eigenwert, geteilt durch den kleineren Eigenwert, beschreibt, ob die Varianzen eher gleich oder ungleich verteilt sind. Sind sie gleich verteilt, so beträgt der Quotient nahe eins und die Kachel 110 enthält keine gerade Linie, entlang derer sich Punkte 145 häufen. Beträgt der Quotient andererseits beispielsweise 10 oder mehr (typischerweise mehrere Größenordnungen mehr als eins), so können signifikant viele Punkte 145 der Kachel 110 entlang einer geraden Linie liegen. Im Schritt 230 kann also bestimmt werden, ob der Quotient näher als ein vorbestimmtes Maß an eins liegt. Ist dies der Fall, so können die Punkte 145 der betrachteten Kachel 110 verworfen werden. Andernfalls können die Punkte 145 der Kachel 110 behalten werden.

In einem Schritt 235 kann für einzelne Punkte 145 einer Kachel 110 jeweils bestimmt werden, ob sie näher als ein weiteres vorbestimmtes Maß am durchschnittlichen Ort q liegen. Diese Überprüfung wird bevorzugt für alle Punkte 145 einer Kachel 110 durchgeführt. Dabei kann der Abstand zwischen einem Punkt 145 und dem durchschnittlichen Ort q als Mahalanobis-Abstand bestimmt werden. übersteigt der bestimmte Abstand das weitere vorbestimmte Ma§, so kann der Punkt 145 verworfen werden; andernfalls kann er beibehalten werden.

In einem Schritt 240 kann auf der Basis der nicht verworfenen Punkte 145 eine Position des Hausgeräts 100 und/oder das Hindernis 115 bestimmt werden. Das Hindernis 115 kann in die Umgebungskarte eingetragen werden, wobei bereits bestehende Informationen über das Hindernis 115 berücksichtigt werden können.

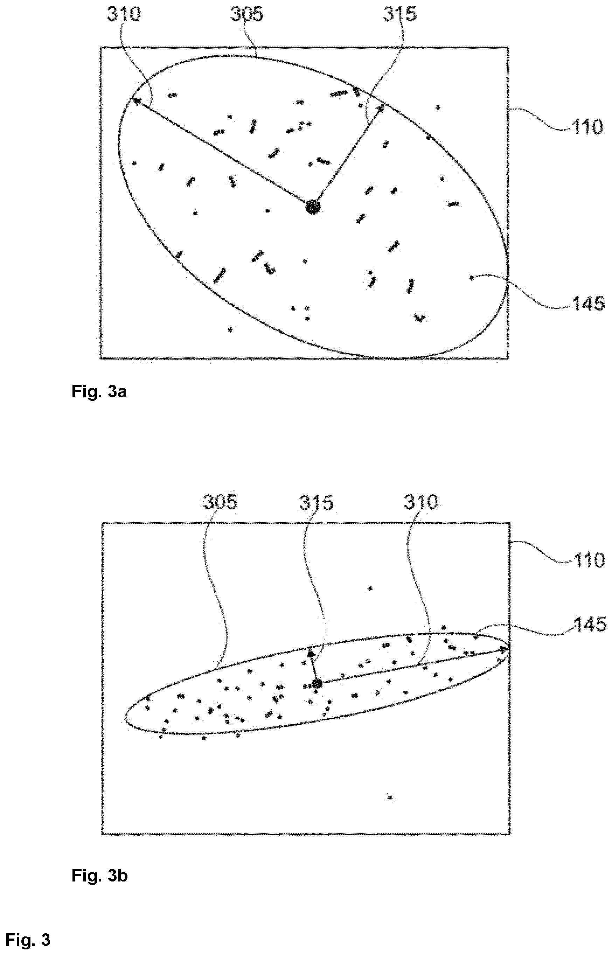

Figur 3 zeigt beispielhafte Varianzen 305 von Punkte 145 in Kacheln 110.

Figur 3a zeigt eine Varianz 305, die zu Punkten 145 korrespondiert, die tendenziell gleich in einer Kachel 110 verteilt sind. Ein erster Eigenvektor 310 und ein zweiter Eigenvektor 315 (die aufeinander senkrecht stehen) haben ähnliche Eigenwerte, sichtbar an den ähnlichen Längen der Eigenvektoren 315. Ein Quotient dieser Eigenwerte liegt nahe eins.

Figur 3b zeigt eine Varianz 305, die zu Punkten 145 korrespondiert, die tendenziell auf einer geraden Linie liegen. Ein erster Eigenvektor 310 und ein zweiter Eigenvektor 315 haben unterschiedliche Eigenwerte, sichtbar an den unterschiedlichen Längen der Eigenvektoren 315, und der Quotient der Eigenwerte ist von eins stark verschieden.

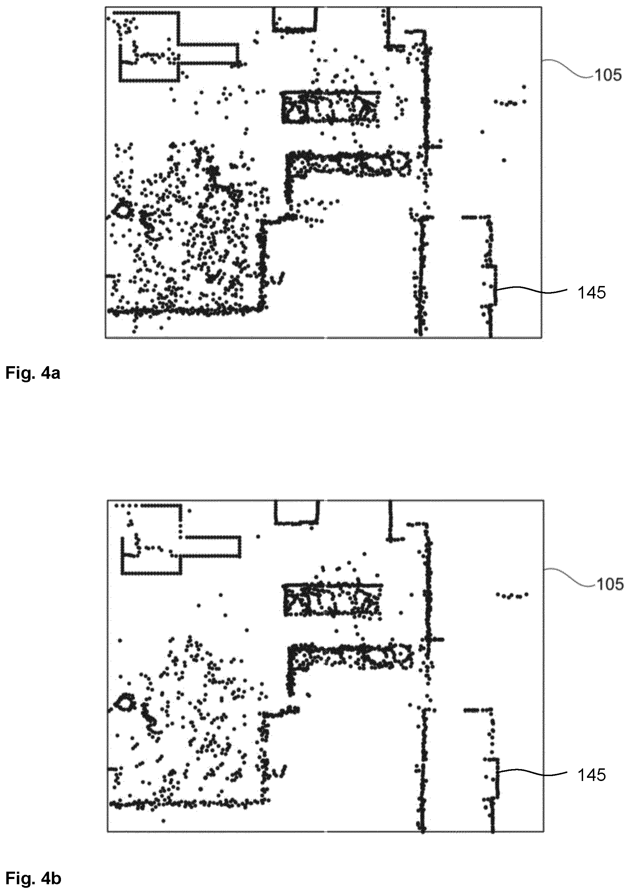

Figur 4 zeigt beispielhafte Abtastungen einer Umgebung 105, die einen beispielhaften Haushalt umfasst. Der dunkle Hintergrund repräsentiert eine betrachtete Bodenfläche in einer Draufsicht; eine Unterteilung in Kacheln 110 ist nicht dargestellt. Jeder bestimmte Punkt 145 ist durch einen hellen Fleck dargestellt.

Figur 4a zeigt Punkte 145 in der Umgebung 105 vor dem Verwerfen; Figur 4b nach dem Verwerfen von Punkten 145, die als Phantompunkte bestimmt wurden. Das Verwerfen kann insbesondere nach den Schritten 230 und 235 des Verfahrens 200 von Figur 2 erfolgen.

Obwohl die Abtastung von Figur 4b augenscheinlich nur wenige Punkte 145 weniger als die Abtastung von Figur 4a enthält, sind Kanten von Hindernissen 115 immer noch klar an den sich an ihnen entlang häufenden Punkten 145 erkennbar.

Einzelne Punkte 145, die in der Abtastung von Figur 4a nahe einer Kante eines Hindernisses 115 sichtbar sind, ohne jedoch Teil der Kante zu sein, sind in der zweiten Abtastung von Figur 4b deutlich reduziert. Dieser Effekt kann insbesondere durch den Schritt 235 hervorgerufen sein.

Außerdem haben in der Abtastung von Figur 4b freie Bereiche zwischen Hindernissen 115 signifikant weniger einzelne Punkte 145. Dieser Effekt kann insbesondere durch den Schritt 230 hervorgerufen sein.

Bezugszeichen

| | |
|---|---|
| 100 | Hausgerät |
| 105 | Umgebung |
| 110 | Kachel |
| 112 | Vorrichtung |
| 115 | Hindernis |
| 120 | Verarbeitungseinrichtung |
| 125 | Sendeeinrichtung |
| 130 | Empfangseinrichtung |
| 135 | Sensor |
| 140 | Speicher |
| 145 | Punkt |
| | |
| 200 | Verfahren |
| 205 | Messsignal aussenden |
| 210 | Reflexion empfangen |
| 215 | Punkt zuordnen |
| 220 | Punkt einer Kachel zuordnen |
| 225 | NDT für Kachel bestimmen |
| 230 | Kachel mit verrauschten Punkten verwerfen |
| 235 | Von durchschnittlichem Punkt entfernte Punkte verwerfen |
| 240 | Umgebungskarte bestimmen |
| | |
| 305 | Varianz |
| 310 | erster Eigenvektor |
| 315 | zweiter Eigenvektor |

**Patentansprüche**

1. Verfahren (200) zum Erstellen einer Umgebungskarte für ein fahrbares Hausgerät (100), wobei das Verfahren (200) folgende Schritte umfasst:

   - Aussenden (205) eines Messsignals in die Umgebung (105) des Hausgeräts (100) und Empfangen (210) von Reflexionen des Messsignals;
   - Bestimmen (215) von Punkten (145) in der Umgebung (105), denen eine Reflexion des Messsignals zugeordnet ist;
   - Bestimmen (225) einer örtlichen Verteilung der Punkte (145) in der Umgebung (105);
   - Verwerfen (230) der Punkte, falls die Verteilung weniger als vorbestimmt einer geraden Linie entspricht; und
   - Erstellen (240) der Umgebungskarte auf der Basis von verbleibenden Punkten (145), wobei die Umgebung (105) in Kacheln (110) vorbestimmter Größe unterteilt wird;
   - **dadurch gekennzeichnet, dass** die Punkte (145) einer Kachel (110) verworfen werden, falls die örtliche Verteilung der Punkte (145) der Kachel (110) weniger als vorbestimmt einer geraden Linie entspricht.

2. Verfahren (200) nach Anspruch 1, wobei das Verfahren (200) folgenden Schritt umfasst:

   - Verwerfen (235) von Punkten (145), deren Abstand zu einem durchschnittlichen Ort der Punkte (145) einen vorbestimmten Wert übersteigt.

3. Verfahren (200) nach Anspruch 2, wobei die Umgebung (105) in Kacheln (110) vorbestimmter Größe unterteilt wird; und wobei ein Punkt (145), der einer Kachel (110) zugeordnet ist, verworfen wird, falls sein Abstand zum durchschnittlichen Ort der Punkte der Kachel (110) den vorbestimmten Wert übersteigt.

4. Verfahren (200) nach einem der Ansprüche 1 bis 3, wobei eine Normalverteilungstransformation NDT für die Punkte einer Kachel bestimmt (235) wird, wobei die NDT einen durchschnittlichen Ort der Punkte (145) und die Varianz der Punkte (145) angibt.

5. Verfahren (200) nach Ansprüchen 1 und 4, wobei die Punkte (200) jeweils in zwei Dimensionen bestimmt sind; wobei die Varianz der Punkte (145) einer Kachel zwei Eigenvektoren (310, 315) umfasst; wobei Eigenwerte der Eigenvektoren (310, 315) bestimmt werden; wobei die Punkte (145) einer Kachel (110) verworfen werden, falls ein Verhältnis zwischen dem größeren und dem kleineren der Eigenwerte mehr als vorbestimmt von eins abweicht.

6. Verfahren (200) nach Ansprüchen 1 und 4, wobei die Punkte (200) jeweils in zwei Dimensionen bestimmt sind; wobei die Varianz der Punkte (145) einer Kachel zwei Eigenvektoren (310, 315) umfasst; wobei Eigenwerte der Eigenvektoren (310, 315) bestimmt werden; wobei die Punkte (145) einer Kachel (110) verworfen werden, falls einer der Eigenwerte einen vorbestimmten Wert übersteigt oder unterschreitet.

7. Verfahren (200) nach Ansprüchen 3 und 4, wobei der Abstand auf der Basis des Mahalanobis-Abstands des Punkts (145) zum durchschnittlichen Punkt bestimmt wird.

8. Vorrichtung (112) zur Bestimmung einer Umgebungskarte für ein fahrbares Hausgerät (100), wobei die Vorrichtung (112) folgendes umfasst:

- eine Sendeeinrichtung (125) zur Aussendung eines Messsignals in die Umgebung (105) des Hausgeräts (100);
- eine Empfangseinrichtung (130) zum Empfangen von Reflexionen des Messsignals; und
- eine Verarbeitungseinrichtung (120), die dazu eingerichtet ist:

    ◦ Punkte (145) in der Umgebung (145) zu bestimmen, denen eine Reflexion des Messsignals zugeordnet ist;
    ◦ eine örtliche Verteilung der Punkte (145) in der Umgebung (105) zu bestimmen (225);
    ◦ die Punkte (145) zu verwerfen, falls die Verteilung weniger als vorbestimmt einer geraden Linie entspricht; und
    ◦ die Umgebungskarte auf der Basis von verbleibenden Punkten zu bestimmen (240);

    ◦ die Umgebung (105) in Kacheln (110) vorbestimmter Größe zu unterteilen; **dadurch gekennzeichnet, dass**
    ◦ die Verarbeitungseinrichtung (120) dazu eingerichtet ist, die Punkte (145) einer Kachel (110) zu verwerfen, falls die örtliche Verteilung der Punkte (145) der Kachel (110) weniger als vorbestimmt einer geraden Linie entspricht.

9. Vorrichtung (112) nach Anspruch 8, wobei die Vorrichtung (112) folgendes umfasst:

- die Verarbeitungseinrichtung (120), die dazu eingerichtet ist:

    ◦ Punkte (145) zu verwerfen, deren Abstände zu einem durchschnittlichen Ort der Punkte (145) einen vorbestimmten Wert übersteigen.

10. Vorrichtung (112) nach Anspruch 8 oder 9, wobei die Sendeeinrichtung (125) und die Empfangseinrichtung (130) von einem LiDAR-Sensor (135) umfasst sind.

11. Bodenreinigungsroboter (100), umfassend eine Vorrichtung (112) nach einem der Ansprüche 8 bis 10.

**Claims**

1. Method (200) for creating a map of the surroundings for a mobile household appliance (100), wherein the method (200) comprises the following steps:

- transmitting (205) a measurement signal into the surroundings (105) of the household appliance (100) and receiving (210) reflections of the measurement signal;
- determining (215) points (145) in the surroundings (105) which are allocated a reflection of the measurement signal;
- determining (225) a spatial distribution of the points (145) in the surroundings (105);
- discarding (230) points if the distribution corresponds less than predetermined to a straight line; and
- creating (240) the map of the surroundings on the basis of the remaining points (145), wherein the surroundings (105) are divided into tiles (110) of a predetermined size;
- **characterised in that** the points (145) of a tile (110) are discarded if the spatial distribution of the points (145) of the tile (110) corresponds less than predetermined to a straight line.

2. Method (200) according to claim 1, wherein the method (200) comprises the following step:

- discarding (235) points (145) whose distance to an average location of the points (145) exceeds a predetermined value.

3. Method (200) according to claim 2, wherein the surroundings (105) are divided into tiles (110) of a predetermined size; and wherein a point (145), which is assigned to a tile (110), is discarded if its distance to an average location of the points of the tile (110) exceeds the predetermined value.

4. Method (200) according to one of claims 1 to 3, wherein a normal distribution transformation NDT is determined (235) for the points of a tile, wherein the NDT indicates an average location of the points (145) and the variance of the points (145).

5. Method (200) according to claims 1 and 4, wherein the points (200) are each determined in two dimensions; wherein the variance of the points (145) of a tile includes two eigenvectors (310, 315); wherein eigenvalues of the eigenvectors (310, 315) are determined; wherein the points (145) of a tile (110) are discarded if a relationship between the larger and the smaller of the eigenvalues deviates more than predetermined from one.

6. Method (200) according to claims 1 and 4, wherein the points (200) are each determined in two dimensions; wherein the variance of the points (145) of a tile includes two eigenvectors (310, 315); wherein eigenvalues of the eigenvectors (310, 315) are determined; wherein the points (145) of a tile (110) are discarded if one of the eigenvalues exceeds or is below a predetermined value.

7. Method (200) according to claims 3 and 4, wherein the distance is determined on the basis of the Mahalanobis distance of the point (145) to the average point.

8. Apparatus (112) for determining a map of the surroundings for a mobile household appliance (100), wherein the apparatus (112) comprises the following:

- a transmission facility (125) for transmitting a measurement signal into the surroundings (105) of the household appliance (100);
- a receive facility (130) for receiving reflections of the measurement signal; and
- a processing facility (120) that is configured so as:

o to determine points (145) in the surroundings (145) which are allocated a reflection of the measurement signal;
o to determine (225) a spatial distribution of the points (145) in the surroundings (105);
o to discard points (145) if the distribution corresponds less than predetermined to a straight line; and
o to determine the map of the surroundings on the basis of remaining points (240);
o to divide the surroundings (105) into tiles (110) of a predetermined size; **characterised in that**
o the processing facility (120) is configured so as to discard the points (145) of a tile (110) if the local distribution of the points (145) of the tile (110) corresponds less than predetermined to a straight line.

9. Apparatus (112) according to claim 8, wherein the apparatus (112) comprises the following:

- the processing facility (120), which is configured so as

o to discard points (145), whose distances to an average location of the points (145) exceed a predetermined value.

10. Apparatus (112) according to claim 8 or 9, wherein the transmission facility (125) and the receive facility (130) are comprised by a LiDAR sensor (135).

11. Floor cleaning robot (100), comprising an apparatus (112) according to one of claims 8 to 10.

**Revendications**

1. Procédé (200) de création d'une carte de l'environnement pour un appareil ménager mobile (100), le procédé (200) comprenant les étapes suivantes :

- émission (205) d'un signal de mesure dans l'environnement (105) de l'appareil ménager (100), et réception (210) de réflexions du signal de mesure ;
- détermination (215) de points (145) dans l'environnement (105), auxquels une réflexion du signal de mesure est attribuée ;
- détermination (225) d'une distribution locale des points (145) dans l'environnement (105) ;
- suppression (230) des points si la correspondance de la distribution avec une ligne droite est inférieure à un niveau prédéfini ; et
- création (240) de la carte de l'environnement sur la base des points restants (145), dans lequel l'environnement (105) est subdivisé en pavés (110) de taille prédéfinie ;
- **caractérisé en ce que** les points (145) d'un pavé (110) sont supprimés si la correspondance de la distribution locale des points (145) du pavé (110) avec une ligne droite est inférieure à un niveau prédéfini.

2. Procédé (200) selon la revendication 1, dans lequel le procédé (200) comprend l'étape suivante :

- suppression (235) de points (145) dont la distance par rapport à un emplacement moyen des points (145) est supérieure à une valeur prédéfinie.

3. Procédé (200) selon la revendication 2, dans lequel l'environnement (105) est subdivisé en pavés (110) de taille prédéfinie, et dans lequel un point (145), qui est attribué à un pavé (110), est supprimé si sa distance par rapport à un emplacement moyen des points du pavé (110) dépasse la valeur prédéfinie.

4. Procédé (200) selon l'une des revendications 1 à 3, dans lequel une transformation en distribution normale (NDT) pour les points d'un pavé est déterminée (235), dans lequel la NDT précise un emplacement moyen des points (145) et la variance des points (145).

5. Procédé (200) selon les revendications 1 et 4, dans lequel les points (200) sont déterminés respectivement en deux dimensions, et dans lequel la variance des points **(145) d'un** pavé comprend deux vecteurs propres (310, 315), dans lequel des valeurs propres des vecteurs propres (310, 315) sont déterminées, dans lequel les points (145) d'un pavé (110) sont supprimés si un rapport entre la plus grande et la plus petite des valeurs propres s'écarte de un d'une valeur supérieure à une valeur prédéfinie.

6. Procédé (200) selon les revendications 1 et 4, dans lequel les points (200) sont déterminés respectivement en deux dimensions, et dans lequel la variance des points (145) d'un pavé comprend deux vecteurs propres (310, 315), dans lequel des valeurs propres des vecteurs propres (310, 315) sont déterminées, dans lequel les points (145) d'un pavé (110) sont supprimés si l'une des valeurs propres est supérieure ou inférieure à une valeur prédéfinie.

7. Procédé (200) selon les revendications 3 et 4, dans lequel la distance est déterminée sur la base de la distance de Mahalanobis du point (145) par rapport au point moyen.

8. Dispositif (112) pour déterminer une carte de l'environnement pour un appareil ménager mobile (100), dans lequel le dispositif (112) comprend les suivants :

- un moyen d'émission (125) pour émettre un signal de mesure dans l'environnement (105) de l'appareil ménager (100) ;
- un moyen de réception (130) pour recevoir des réflexions du signal de mesure ; et
- un moyen de traitement (120) qui est configuré pour :

  ○ déterminer des points (145) dans l'environnement (105), auxquels une réflexion du signal de mesure est attribuée ;
  ○ déterminer (225) une distribution locale des points (145) dans l'environnement (105) ;
  ○ supprimer les points (145) si la correspondance de la distribution avec une ligne droite est inférieure à un niveau prédéfini ; et
  ○ déterminer (240) la carte de l'environnement sur la base des points restants ;
  ○ subdiviser l'environnement (105) en pavés (110) de taille prédéfinie, **caractérisé en ce que** :

    ○ le moyen de traitement (120) est configuré pour supprimer les points (145) d'un pavé (110) si la correspondance de la distribution locale des points (145) du pavé (110) avec une ligne droite est inférieure à un niveau prédéfini.

9. Dispositif (112) selon la revendication 8, dans lequel le dispositif (112) inclut les caractéristiques suivantes :

- le moyen de traitement (120) est configuré pour :

  o supprimer des points (145), dont les distances par rapport à un emplacement moyen des points (145) dépassent une valeur prédéfinie.

10. Dispositif (112) selon la revendication 8 ou 9, dans lequel le moyen d'émission (125) et le moyen de réception (130) sont inclus dans un capteur LIDAR (135).

11. Robot de nettoyage de sol (100), comprenant un dispositif (112) selon l'une des revendications 8 à 10.

**Fig. 1**

200

```
┌─────────────────┐
│       205       │
└─────────────────┘
         │
         ▼
┌─────────────────┐
│       210       │
└─────────────────┘
         │
         ▼
┌─────────────────┐
│       215       │
└─────────────────┘
         │
         ▼
┌─────────────────┐
│       220       │
└─────────────────┘
         │
         ▼
┌─────────────────┐
│       225       │
└─────────────────┘
         │
         ▼
┌─────────────────┐
│       230       │
└─────────────────┘
         │
         ▼
┌─────────────────┐
│       235       │
└─────────────────┘
         │
         ▼
┌─────────────────┐
│       240       │
└─────────────────┘
```

**Fig. 2**

**Fig. 3a**

**Fig. 3b**

**Fig. 3**

**Fig. 4a**

**Fig. 4b**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102018217000 A1
- US 2018253107 A
- EP 3514493 A1
- US 20190035090 A1

**In der Beschreibung aufgeführte Nicht-Patentliteratur**

- Keyframe-based Local Normal Distribution Transform Occupancy Maps for Environment Mapping. **BELTER DOMINIK et al.** IEEE 23FiD INTERNATIONAL CONFERENCE ON EMERGING TECHNOLOGIES AND FACTORY AUTOMATION (ETFA). IEEE, 04 September 2018, vol. 1, 706-712